# EUROPÄISCHE PATENTSCHRIFT

(11) **EP 4 599 681 B1**
(45) Veröffentlichungstag und Bekanntmachung des Hinweises auf die Patenterteilung: **05.08.2026**
(21) Anmeldenummer: 25155751.8
(22) Anmeldetag: 04.02.2025
(51) Int. Cl.: A22C 11/00

(54) **ZUFÜHRVORRICHTUNG ZUM ZUFÜHREN EINER WÜRSTCHENKETTE ZU EINER DIE WÜRSTCHENKETTE WEITERVERARBEITENDEN VORRICHTUNG**
FEEDING DEVICE FOR FEEDING A SAUSAGE CHAIN TO A DEVICE PROCESSING THE SAUSAGES CHAIN
DISPOSITIF D'ALIMENTATION D'UNE CHAÎNE DE SAUCISSES À UN DISPOSITIF DE TRAITEMENT ULTÉRIEUR DE LA CHAÎNE DE SAUCISSES

(30) Priorität: 06.02.2024 DE 102024103327
(43) Veröffentlichungstag der Anmeldung: 13.08.2025
(73) Patentinhaber: VEMAG Maschinenbau GmbH, 27283 Verden/Aller (DE)
(72) Erfinder: Meininger, Thorsten, 27283 Verden (DE); Knodel, Peter, 28876 Oyten (DE); Albrecht, Denise, 27283 Verden (DE)
(74) Vertreter: Eisenführ Speiser

(56) Entgegenhaltungen:
- EP-A1- 0 743 008
- EP-B1- 0 395 154
- CN-A- 113 424 859
- GB-A- 2 161 445

## Beschreibung

Die Erfindung bezieht sich auf eine Zuführvorrichtung zum Zuführen einer aus mehreren Würstchen gebildeten Würstchenkette zu einer die Würstchenkette weiterverarbeitenden Vorrichtung, mit einem Gestell, und einem an dem Gestell angeordneten Zuführteil zum Zuführen der Würstchenkette, wobei das Zuführteil eine Oberfläche aufweist, auf der die Würstchenkette im Betrieb aufliegt und in einer Zuführrichtung in Richtung der weiterverarbeitenden Vorrichtung bewegt wird. Des Weiteren bezieht sich die Erfindung auch auf eine Vorrichtung zum Weiterverarbeiten einer Würstchenkette, mit zumindest einer die Würstchenkette übernehmenden und in einer Förderrichtung transportierenden Fördereinrichtung, und einer der Fördereinrichtung stromaufwärts angeordneten Zuführvorrichtung.

Im Stand der Technik werden solche Zuführvorrichtungen, auf der üblicherweise eine sich aus mehreren miteinander verbundenen Würstchen bestehende Würstchenkette von Hand abgelegt wird, zum Zuführen einer Würstchenkette zu einer weiterverarbeitenden Vorrichtung verwendet. Häufig werden als Zuführvorrichtungen Ablagetische eingesetzt, welche zumindest ein Gestell und ein am Gestell angeordnetes als Tischplatte ausgebildetes Zuführteil aufweisen. Das Zuführteil hat eine ebene Oberfläche, auf der die Würstchenkette vor dem Zuführen zur weiterverarbeitenden Vorrichtung abgelegt werden.

Um die Würstchenkette der weiterverarbeitenden Vorrichtung zuzuführen, wird ein Ende der Würstchenkette einer der Zuführvorrichtung nachgeschalteten Fördereinrichtung der weiterverarbeitenden Vorrichtung zugeführt, welche die Würstchenkette mit einer

vorgegebenen Fördergeschwindigkeit von der Zuführvorrichtung herunter bewegt. Die Würstchenkette wird häufig mäanderförmig auf der Zuführvorrichtung abgelegt, wobei zwei oder drei Würstchen in mehreren Reihen hintereinander quer zur eigentlichen Zuführrichtung auf der Oberfläche des Zuführteils ausgerichtet sind. Beim Zuführen der mäanderförmig bzw. in Schlaufen abgelegten Würstchenkette entsteht an jedem Schlaufenende, die bezogen auf die Zuführrichtung üblicherweise außermittig angeordnet und damit radial beabstandet zur eigentlichen Zuführrichtung der Würstchenkette sind, ein ruckartiges Beschleunigen mit auf das Schlaufenende einwirkenden Querkräften, welche die Abdrehstellen zwischen den einzelnen Würstchen der Würstchenkette relativ stark belasten. Diese Belastung kann bereits ausreichen, um die Abdrehstelle zwischen zwei Würstchen zum Reißen zu bringen.

Zudem kommt es wegen der schräg zur Zuführrichtung wirkenden Querkräfte beim Bewegen der Würstchenkette auf dem Zuführteil zu einem Hin- und Her-Schlingern der Würstchenkette um die eigentliche Zuführrichtung, sodass ein Würstchen mit seinem stirnseitigen Ende mit der die Würstchenkette fördernden Fördereinrichtung kollidieren kann. Damit wird das Risiko eines Abrisses an einer Abdrehstelle der Würstchenkette noch erhöht.

Aus EP 0 743 008 A1 ist eine Vorrichtung zum Erzeugen und Überführen von in Ketten gebildeten Naturdarmwürsten auf eine Transporteinrichtung bekannt. Die Vorrichtung umfasst eine Füll- und Portioniermaschine, von der aus über eine Übergaberutsche eine Wurstdarm-Kette auf eine Transporteinrichtung überführt wird. Die Übergaberutsche besteht aus einer aus Kunststoff ausgebildeten Halbschale. Die Übergaberutsche weist einen Querschnitt auf, der sich vom füllrohrseitigen Ende in Richtung des dem Transporthaken zugewandten Endes trichterförmig verringert.

Der Erfindung lag daher die Aufgabe zugrunde, eine Zuführvorrichtung der vorbezeichneten Gattung dahingehend zu verbessern, dass die oben beschriebenen Nachteile vermieden werden. Insbesondere liegt der Erfindung die Aufgabe zugrunde, eine Zuführvorrichtung aufzuzeigen, mithilfe derer das Zuführen einer Würstchenkette zu einer weiterverarbeitenden Vorrichtung verbessert ist.

Die Erfindung löst die ihr zugrundeliegende Aufgabe bei einer Zuführvorrichtung zum Zuführen einer Würstchenkette zu einer die Würstchenkette weiterverarbeitenden Vorrichtung mit den Merkmalen von Anspruch 1 oder 14.

Die vorliegende Erfindung verfolgt mit dem Vorsehen einer derartig erfindungsgemäß ausgebildeten Oberfläche den Ansatz, dass mit dem Zuführen auf der trichterförmig konkav geformten Oberfläche das Umlenken der Würstchen zur Zuführrichtung, welche insbesondere durch die Fördereinrichtung der weiterverarbeitenden Vorrichtung bestimmt wird, durch die äußeren (seitlichen) Bereiche der Oberfläche unterstützt wird. Mittels der im Wesentlichen quer zur Zuführrichtung Z trichterförmig konkav ausgebildeten Oberfläche des Zuführteils, insbesondere deren äußeren, seitlichen Bereiche, wird das Hin- und Herbewegen der Würstchenkette um die Zuführrichtung vorteilhaft verringert. Vielmehr wirkt die trichterförmig konkave Ausgestaltung der Oberfläche einem weiteren radialen Nachaußenbewegen der Würstchen, bezogen auf die Zuführrichtung, entgegen. Zudem nimmt durch die erfindungsgemäß ausgebildete Oberfläche des Zuführteils zumindest auch das Risiko einer Kollision eines stirnseitigen Endes des Würstchens mit einer die Würstchenkette fördernden Fördereinrichtung ab. Die Oberfläche ist insbesondere in Richtung quer zur Zuführrichtung, also in einem Bereich zwischen den einander gegenüberliegenden äußeren Bereichen trichterförmig konkav ausgebildet. Vorzugsweise weist die Oberfläche des Zuführteils mindestens einen Abschnitt in Zuführrichtung der Würstchenkette auf, der quer zur Zuführrichtung trichterförmig konkav ausgebildet ist.

Gemäß einer bevorzugten Weiterbildung der Zuführvorrichtung werden die äußeren Bereiche der Oberfläche in Zuführrichtung zunehmend steiler, derart, dass die Würstchen der Würstchenkette, aufgrund der zunehmenden Steilheit, verstärkt radial nach innen gelenkt bzw. geführt werden. Speziell durch die steiler werdenden äußeren bzw. seitlichen Bereiche der die Würstchenkette aufnehmenden Oberfläche des Zuführteils wird den auf die Würstchen einwirkenden Querkräften entgegengewirkt. Beim Bewegen der Würstchenkette unterstützt zudem die Schwerkraft das Umlenken der Würstchen in Zuführrichtung. In einer Ausführungsform der Erfindung ist vorgesehen, dass die äußeren Bereiche der Oberfläche neben der zunehmenden Steilheit zusätzlich in Zuführrichtung höher werden.

Eine Weiterbildung der Zuführrichtung sieht vor, dass die Oberfläche des Zuführteils einen sich im Wesentlichen quer zur Zuführrichtung aufspannenden Zuführquerschnitt definiert, der sich in Zuführrichtung mindestens abschnittsweise verringert. Mit dem sich quer zur Zuführrichtung aufspannenden Zuführquerschnitt, der in Zuführrichtung enger wird, erfolgt eine bevorzugt unterstützende seitliche Führung der insbesondere mäanderförmig auf die Oberfläche des Zuführteils aufgelegten Würstchenkette. Unter einem sich insbesondere in seiner Breite verringernden Zuführquerschnitt ist ein seitliches Verengen der äußeren Bereiche bzw. der oberen Begrenzung am Zuführteil zu verstehen. Der Zuführquerschnitt ist im Sinne der Erfindung nach oben begrenzt durch eine gedachte Linie, welche zwischen zwei oberen seitlichen Rändern der äußeren Bereiche der Oberfläche des Zuführteils verläuft. In Verbindung mit der trichterförmig konkaven Ausbildung der vorzugsweise nach oben offenen Oberfläche des Zuführteils wird die Zuführbewegung der Würstchenkette seitlich derart beruhigt, dass sich die Würstchenkette mit Verlassen des Zuführteils bevorzugt deckungsgleich zu der bevorzugt mit dem erfindungsgemäßen Zuführteil zu erreichenden Zuführrichtung bewegt. Es wäre auch erfindungsgemäß, wenn der Zuführquerschnitt des Zuführteils nach oben begrenzt wäre durch zum Beispiel einen nicht gezeigten Deckel oder eine obere Wand.

Vorzugsweise ist der durch die Oberfläche begrenzte Zuführquerschnitt des Zuführteils entlang zumindest eines Abschnitts in Zuführrichtung im Wesentlichen U-förmig ausgebildet. Mit der U-förmigen Ausgestaltung der nach oben offenen Oberfläche am Zuführteil kann die Zuführbewegung der Würstchenkette in Zuführrichtung bevorzugt auf einfache und effiziente Weise beruhigt werden. Nachteilig wirkende Querkräfte oder das Risikos eines Kontakts des stirnseitigen Endes eines Würstchens mit der Fördereinrichtung kann vorteilhaft auf ein Minimum reduziert werden.

In einer bevorzugten Ausführungsform der Zuführvorrichtung bildet die Oberfläche des Zuführteils mindestens entlang eines Abschnitts in Zuführrichtung einen nach oben offenen, sich in Zuführrichtung verengenden Trichter aus, wobei vorzugsweise die Oberfläche im Wesentlichen absatzfrei ausgebildet ist. Die Ausgestaltung zumindest eines Abschnitts der Oberfläche des Zuführteils als nach oben offener Trichter stellt eine strukturell bzw. konstruktiv einfache Möglichkeit zur Ausgestaltung eines Zuführteils dar. Zum einen kann die Würstchenkette einfach an einem Ende des offenen Trichters mäanderförmig aufgelegt werden und durch dessen Verringerung im Zuführquerschnitt ist bis zur Übergabe der Würstchenkette an die Fördereinrichtung der weiterverarbeitenden Vorrichtung eine in seitlicher Richtung beruhigte Zuführbewegung verwirklicht. An einem nach oben offenen Trichter kann zudem die Zuführbewegung der Würstchenkette visuell überwacht werden. Etwaige Störungen beim Zuführen der Würstchenkette können schnell und einfach erfasst und notwendige Gegenmaßnahmen unmittelbar eingeleitet werden Mit der bevorzugt absatzfreien Ausgestaltung der Oberfläche, also ohne Kanten und Stufen, ist zudem das Abgleiten der Würstchenkette auf dem Zuführteil begünstigt.

Gemäß einer bevorzugten Weiterbildung der Zuführvorrichtung wird der von der Oberfläche des Zuführteils definierte Zuführquerschnitt zumindest bereichsweise von einem Radius ausgebildet, der sich in Zuführrichtung verringert. Mit Vorsehen eines Radius, der vorrangig den die Oberfläche des Zuführteils definierenden Zuführquerschnitt bestimmt, ist eine einfache Möglichkeit zur Ausgestaltung einer trichterförmigen, insbesondere quer zur Zuführrichtung, zumindest bereichsweise konkav ausgebildeten und vor allem absatzfreien Oberfläche für eine in Zuführrichtung zu vergleichmäßigende, beruhigende Zuführbewegung der Würstchenkette geschaffen.

Ferner ist gemäß einer bevorzugten Ausführungsform vorgesehen, dass sich die Breite der Oberfläche, gemessen an ihrer oberen Begrenzung, in Zuführrichtung wenigstens abschnittsweise und/oder der den Zuführquerschnitt bereichsweise ausbildende Radius in Zuführrichtung kontinuierlich verringert. Die sich bevorzugt in ihrer Breite verringernde Oberfläche bzw. der sich kontinuierlich verringernde Radius in Zuführrichtung des Zuführteils unterstützt bzw. verbessert das Umlenken der Schlaufenenden der mäanderförmig und quer zur Zuführrichtung des Zuführteils aufgelegten Würstchenkette und fördert damit einegleichmäßige Zuführbewegung in Zuführrichtung des Zuführteils. Durch das kontinuierliche Verringern ist ein allmähliches Verengen des Zuführquerschnitts am Zuführteil umgesetzt, wobei vorzugsweise die gesamte Oberfläche am Zuführteil absatzfrei ausgeführt ist, was das Abgleiten der Würstchenkette auf der Oberfläche des Zuführteils zusätzlich begünstigt. Vorliegend wird die Breite der nach oben offenen Oberfläche durch eine die obere Begrenzung bzw. die äußeren Bereiche fiktive verbindende Linie definiert, welche vorzugsweise auch die obere Begrenzungslinie für den durch die Oberfläche definierten Zuführquerschnitt bestimmt.

In einer bevorzugten Ausgestaltung der Zuführvorrichtung weist die Oberfläche entlang eines Abschnitts in Zuführrichtung einen im Wesentlichen geradlinigen, einen konvex und/oder konkav gekrümmten Verlauf auf. In einer Ausführung weist die trichterförmig konkav ausgebildete Oberfläche des Zuführteils in Zuführrichtung selbst einen geradlinigen Verlauf auf. Abschnitte der Oberfläche des Zuführteils weisen somit in Zuführrichtung bevorzugt eine identische Steigung auf. In einer optionalen oder alternativen Ausführung können Abschnitte der trichterförmig konkav ausgebildeten Oberfläche des Zuführteils auch einen konvex und/oder konkav gekrümmten Verlauf haben. Insbesondere ausgehend vom Aufnahmebereich des Zuführteils in Richtung des Abgabebereichs kann die Oberfläche in Zuführrichtung eine zunehmende und/oder abnehmende Steigung haben und demnach mit konvexen und/oder konkaven Krümmungsverläufe ausgerüstet sein.

Eine Weiterbildung der Zuführvorrichtung sieht vor, dass die Oberfläche des Zuführteils zumindest abschnittsweise einen in Zuführrichtung ersten Aufnahmebereich zum Aufnehmen der Würstchenkette definiert. Mithilfe des Aufnahmebereichs ist insbesondere das Auflegen der bevorzugt in Schlaufen oder mäanderförmig auf das Zuführteil aufzulegenden Würstchenkette vereinfacht. Die mittels des Zuführteils der weiterverarbeitenden Vorrichtung zuzuführende Würstchenkette wird insbesondere in Schlaufen quer zur Zuführrichtung des Zuführteils verlaufend aufgelegt. Eine Schlaufe der Würstchenkette kann beispielsweise aus zwei oder drei nebeneinander in Reihe gelegten Würstchen bestehen, wobei die am Ende einer Schlaufe sich unmittelbar anschließenden Würstchen dann um ca. 180° gedreht in die entgegengesetzte Richtung verlaufend angeordnet sind.

Gemäß einer bevorzugten Ausführung ist der Aufnahmebereich im Wesentlichen eben ausgebildet oder weist zumindest quer zur Zuführrichtung eine konkave Krümmung auf, welche vorzugsweise einen Radius größer 1 m hat. Damit ist erreicht, dass die in Schlaufen aufgelegte Würstchenkette sicher auf dem Aufnahmebereich der Oberfläche des Zuführteils abgelegt werden kann. Ausgehend vom Aufnahmebereich mit einem Mindestradius von 1 m, vorzugsweise vom mehr als 2 m verringert sich dann der Zuführquerschnitt in seiner Breite bzw. der Radius des Zuführquerschnitts in Zuführrichtung bis vorzugsweise zum Abgabebereich des Zuführteils.

Gemäß einer bevorzugten Ausführung definiert die Oberfläche einen Abgabebereich zum Abgeben der Würstchenkette, der die geringste Breite oder den geringsten Zuführquerschnitt aufweist. Damit ist bewirkt, dass die im Aufnahmebereich aufgegebene Würstchenkette beim Erreichen des Abgabebereichs in Zuführrichtung zentriert an eine der Zuführvorrichtung nachgeordnete weiterverarbeitende Vorrichtung abgegeben wird. Etwaige auf die Würstchenkette, insbesondere deren Abdrehstellen, einwirkende Querbeschleunigungen sind auf ein Minimum reduziert. Damit ist die Belastung auf die Würstchenkette insgesamt verringert und ein Abreißen im Bereich einer Abdrehstelle vorteilhaft vermieden.

Vorzugsweise ist der Abgabebereich, auch wenn dieser insbesondere die geringste Breite bzw. den geringsten Zuführquerschnitt aufweist, im Vergleich zu den in Zuführrichtung vorgelagerten Abschnitten der Oberfläche des Zuführteils in Höhenrichtung am höchsten ausgeführt. Im Abgabebereich ist bevorzugt der Höhenabstand zwischen den äußeren Bereichen der Oberfläche und einem das Zentrum in Richtung der Zuführrichtung bildenden trichterförmig konkaven Grund der Oberfläche am größten. Im Gegensatz zur Breite des Zuführquerschnitts vergrößert sich der Zuführquerschnitt in Höhenrichtung. Breite und Höhe des Zuführquerschnitts stehen insbesondere senkrecht aufeinander und verlaufen jeweils im Wesentlichen senkrecht zur Zuführrichtung der Würstchenkette am Zuführteil.

Vorzugsweise sind im Abgabebereich zusätzlich zur konkaven Krümmung der Oberfläche zwei im Wesentlichen parallel zueinander verlaufende, seitliche Wandabschnitte vorgesehen. Mithilfe der parallelen Wandabschnitte wird insbesondere der Abgabebereich seitlich begrenzt und bevorzugt erhöht. Durch die erhöhenden Wandabschnitte ist insbesondere das Übergeben der Würstchenkette in beispielsweise einen Einlaufbereich einer nachgeschalteten Fördereinrichtung der weiterverarbeitenden Vorrichtung vereinfacht. Querbeschleunigungen der Würstchenkette werden mittels der seitlichen Wandbereiche abgebaut, so dass der Kontakt der stirnseitigen Endflächen der Würstchen der Würstchenkette mit der Fördereinrichtung und damit die Beeinträchtigung einer Abdrehstelle zwischen zwei Würstchen vermieden ist. Vorzugsweise ist vorgesehen, dass die Wandabschnitte einen Abstand zueinander aufweisen, der in etwa dem doppelten Radius der zugehörigen, die Wandabschnitte miteinander verbindenden konkav gekrümmten Oberfläche entspricht. Zwischen der konkav gekrümmten Oberfläche und den sich daran anschließenden, ebenen Wandabschnitten ist ein absatzfreier Übergang ausgebildet.

Gemäß einer bevorzugten Ausführung weisen die Wandabschnitte im Abgabebereich einen Abstand zueinander auf, der größer als der Durchmesser der zuzuführenden Würstchen und kleiner als der Mittenabstand zweier Förderelemente einer dem Zuführteil nachgeschalteten Fördereinrichtung der weiterverarbeitenden Vorrichtung ist, wobei die Förderelemente einen Einlaufbereich an der weiterverarbeitenden Vorrichtung für die Würstchenkette definieren. Durch das Einhalten eines Mindestabstands zwischen den Wandabschnitten ist gewährleistet, dass die Würstchenkette mit ihren Würstchen reibungsarm und mit verminderter Kraft über das Zuführteil in Richtung des Abgabebereichs bewegt werden kann. Hingegen wird das Höchstmaß des Abstands der beiden seitlichen parallelen Wandabschnitte durch die der Zuführrichtung nachgeordnete Fördereinrichtung bestimmt. Insbesondere ist das Höchstmaß geringer, insbesondere ein Drittel geringer, als der Mittenabstand zwischen den Förderelementen der dem Abgabebereich des Zuführteils nachgeschalteten Fördereinrichtung. Speziell beim Zuführen der Würstchenkette zur Fördereinrichtung ist bewirkt, dass ein den Einlaufbereich der Fördereinrichtung erreichendes Würstchen auf einen sich bereits ausreichend verengten Abschnitt im Einlaufbereich trifft, der das betreffende Würstchen sanft aufnimmt.

Eine Weiterbildung der Zuführrichtung sieht vor, dass die Oberfläche des Zuführteils vom Aufnahmebereich in Richtung des Abgabebereichs ansteigend ausgerichtet ist. Damit ist beim Bewegen der Würstchenkette auf der Oberfläche des Zuführteils bewirkt, dass die noch verbleibenden Schlaufen der Würstchenkette im Aufnahmebereich sich nicht selbsttätig in Richtung des Abgabebereichs bewegen. Vielmehr entsteht mit Zuführen ein Entzerren der Würstchenkette, das sich vorteilhaft auf das Umlenken der zunächst quer verlaufenden Würstchen in Richtung der eigentlich mittels des Zuführteils zu erreichenden Zuführrichtung auswirkt. Vorzugsweise weist die Oberfläche zwischen dem Aufnahmebereich und dem Abgabebereich einen Steigungswinkel α von kleiner 10° auf. Damit ist trotz der positiven Steigung zwischen Aufnahmebereich und Abgabebereich eine verhältnismäßig geringe zusätzliche Zugkraft zum Bewegen der Würstchenkette notwendig, die jedoch keinen Einfluss auf die Abdrehstellen zwischen den miteinander verbundenen Würstchen der Würstchenkette hat.

Gemäß einer bevorzugten Weiterbildung, die sowohl einen separaten, zweiten erfindungswesentlichen Aspekt als auch eine optionale Ausgestaltung der Zuführvorrichtung betrifft, ist vorgesehen, dass das Zuführteil eine strukturierte Oberfläche aufweist, die vorzugsweise eine Auflagefläche mit einem verringerten Reibungskoeffizienten für die Würstchenkette ausbildet. Mithilfe der erfindungsgemäß strukturierten Oberfläche des Zuführteils ist der Reibungskoeffizient der Auflagefläche für die Würstchenkette bevorzugt insoweit verringert, dass die Zugbelastung der Abdrehstellen beim Bewegen der Würstchenkette in Zuführrichtung auf der Oberfläche des Zuführteils auf ein Minimum reduziert ist. Allein durch das Vorsehen der strukturierten Oberfläche kann der Reibungskoeffizient zwischen dem Zuführteil und der Würstchenkette derart verringert werden, dass trotz der wirkenden Querbeschleunigungen beim Bewegen der in Schlaufen aufgelegten Würstchenkette ein Zerreißen der Abdrehstellen zwischen den Würstchen der Würstchenkette sicher vermieden ist. Insbesondere in Kombination mit der trichterförmig konkav ausgebildeten Oberfläche am Zuführteil, welche durch ihre äußeren Bereiche ein nach innen Lenken der Würstchen beim Bewegen der Würstchenkette in Zuführrichtung bewirkt, wird die Zugbelastung auf die Würstchenkette und insbesondere deren Abdrehstellen derart stark verringert, dass mittels eines derartig erfindungsgemäß ausgebildeten Zuführteils ein stets sicheres Zuführen einer darauf abgelegten Würstchenkette zu einer beliebigen nachgeordneten Vorrichtung erreicht wird.

Gemäß einer bevorzugten Ausführung ist vorgesehen, dass die strukturierte Oberfläche Erhebungen und/oder Vertiefungen auf der als Auflagefläche für die Würstchenkette dienenden Oberfläche des Zuführteils aufweist. Mittels der als Erhebungen und/oder Vertiefungen ausgebildeten Struktur der Oberfläche gleitet die Würstchenkette vereinfacht auf dem Zuführteil ab. Mithilfe der erzeugten Erhebungen und/oder Vertiefungen sind Strukturierungen geschaffen, welche den Flächenanteil, der mit der Würstchenkette direkt in Kontakt steht, auf ein Minimum reduzieren. Damit ist gleichzeitig die Reibung zwischen der Würstchenkette und der Oberfläche des Zuführteils verringert, wodurch die Zugbelastung auf die als Abdrehstellen ausgebildeten Verbindungsbereiche zwischen den Würstchen der Würstchenkette weiter verringert ist.

Eine Weiterbildung der Zuführvorrichtung sieht vor, dass die Oberfläche Strukturierungen aufweist, ausgewählt aus der Gruppe: Waben, Rillen, Pyramiden, Noppen und Kombinationen derer. Das Vorsehen einer Waben-, Rillen-, Pyramiden- oder Noppenstruktur oder gegebenenfalls einer Kombination der verschiedenen Strukturen untereinander entlang eines Oberflächenabschnitts des Zuführteils stellt eine einfache und wirksame Möglichkeit zum Ausbilden einer strukturierten Oberfläche und zur Reduzierung der Reibung zwischen Zuführteil und der darauf zu bewegenden Würstchenkette dar. Vorrangig sind die an der Oberfläche ausgebildeten Strukturierungen dazu vorgesehen, die Auflagefläche zwischen Zuführteil und der darauf entlangzubewegenden Würstchenkette auf ein Minimum zu reduzieren.

Eine mögliche Ausführungsform der Zuführvorrichtung sieht vor, dass die Oberfläche mit einer ihren Reibungskoeffizienten verringernden Beschichtung ausgerüstet ist und/oder ein Gleitmittel im Betrieb auf die Oberfläche aufgebracht ist. Mithilfe der Beschichtung auf der Oberfläche und/oder dem auf die Oberfläche aufgebrachten Gleitmittel kann die Reibung zwischen der Oberfläche des Zuführteils und der darauf aufliegenden und darauf entlangbewegbaren Würstchenkette weiter reduziert werden. Als Beschichtung dient beispielsweise eine Gleitbeschichtung, deren Aufgabe es ist, die Reibung und gleichzeitig einen möglichen Verschleiß an der Oberfläche des Zuführteils zu vermindern. Zudem wird mithilfe der Gleitbeschichtung eine definierte Reibungszahl mit möglichst geringer Streuung erzielt.

Mit dem optional oder alternativ auf die Oberfläche aufgebrachten, insbesondere flüssigen Gleitmittel ist eine zusätzliche Gleitschicht zwischen der Oberfläche des Zuführteils und den untereinander verbundenen Würstchen der Würstchenkette erzeugt. Als Gleitmittel kann beispielsweise im einfachsten Fall ein Wasserfilm dienen, mittels dessen die Reibungszahl ebenfalls weiter reduzierbar ist.

Vorzugsweise ist das Zuführteil aus einem flachen Bandmaterial ausgebildet, wobei das gesamte Zuführteil trichterförmig mit einer sich in Zuführrichtung der Würstchen verringernden Breite ausgebildet ist. Mit dem Vorsehen eines flachen Bandmaterials ist eine strukturell einfache Möglichkeit zum Herstellen einer bevorzugt trichterförmig konkav ausgebildeten, die Würstchenkette aufnehmenden Oberfläche bewirkt, entlang derer die der weiterverarbeitenden Vorrichtung zuzuführende Würstchenkette mit geringem Kraftaufwand und damit einer geringen Belastung der die Würstchen miteinander koppelnden Abdrehstellen bewegt werden kann. Mit Verwendung eines Bandmaterials ist es zudem möglich, statt nur der trichterförmig konkaven Ausgestaltung der Oberfläche das gesamte Zuführteil in eine Art Trichterform zu bringen, sodass dieses auf seiner die Würstchenkette aufnehmenden Oberseite, zumindest in einer Erstreckungsrichtung, insbesondere quer zur Zuführrichtung der Würstchenkette, eine konkave Krümmung aufweist. Das Zuführteil weist vorzugsweise eine sich in Zuführrichtung der Würstchen verringernde Breite auf, wobei die Krümmung bzw. der Krümmungsradius des Zuführteils in Zuführrichtung abnimmt. Dadurch entstehen insbesondere äußere Bereiche an der Oberfläche, die in Zuführrichtung zunehmend steiler werden, sodass die Würstchen der Würstchenkette aufgrund der zunehmenden Steilheit der äußeren Bereiche verstärkt radial nach innen umgelenkt werden.

Eine mögliche bevorzugte Ausführungsform der Zuführvorrichtung sieht vor, dass das Zuführteil aus einem elastisch und/oder plastisch verformbaren Material ausgebildet ist, insbesondere Kunststoff, Edelstahl oder einem Verbundmaterial. Die Verwendung eines elastisch und/oder plastisch verformbaren Materials birgt den Vorteil, dass sich das Zuführteil vergleichsweise einfach in die benötigte Form bringen lässt, um die notwendige trichterförmig konkave Ausgestaltung an der als Auflagefläche für die Würstchenkette dienenden Oberfläche zu erhalten. Als Material wird beispielsweise Kunststoff, Edelstahl oder ein Verbundmaterial verwendet, welches bevorzugt lebensmittelecht ausgeführt ist und die notwendigen Eigenschaften hinsichtlich einer einfachen Reinigung im Bereich der Lebensmitteltechnik erfüllt.

Alternativ kann das Zuführteil anstatt aus einem flachen Bandmaterial auch aus Vollmaterial ausgebildet sein, wobei in das Vollmaterial die entsprechend trichterförmig konkav ausgeführte Oberfläche, beispielsweise mithilfe von spanenden Bearbeitungsverfahren, eingebracht wird.

Ein weiterer Aspekt der vorliegenden Erfindung betrifft eine Vorrichtung zum Weiterverarbeiten einer Würstchenkette, mit zumindest einer die Würstchenkette übernehmenden und in einer Förderrichtung transportierenden Fördereinrichtung, und einer zur Fördereinrichtung stromaufwärts angeordneten Zuführvorrichtung. Die weiterverarbeitende Vorrichtung löst ebenfalls die der erfindungsgemäßen Zuführvorrichtung zugrundeliegende Aufgabe, indem die Zuführvorrichtung gemäß einer der vorstehend beschriebenen, bevorzugten Ausführungsformen ausgebildet ist. Die Vorrichtung zum Weiterverarbeiten einer Würstchenkette weist somit ebenfalls eine Zuführvorrichtung auf, die ein Gestell und ein am Gestell angeordnetes Zuführteil zum Zuführen von zu einer Würstchenkette miteinander verbundenen Würstchen zur weiterverarbeitenden Vorrichtung aufweist, wobei die Oberfläche des Zuführteils trichterförmig konkav ausgebildet ist und dazu eingerichtet ist, die Würstchen bezogen auf die Zuführrichtung von äußeren Bereichen der Oberfläche wenigstens abschnittsweise radial nach innen zu lenken.

Die Erfindung gemäß dem dritten Aspekt macht sich dieselben Vorteile zunutze wie die Zuführvorrichtung gemäß dem ersten und zweiten Aspekt. Bevorzugte Ausführungsformen bzw. Weiterbildungen des ersten und zweiten Aspekts sind zugleich auch bevorzugte Ausführungsformen bzw. Weiterbildungen der weiterverarbeitenden Vorrichtung gemäß dem dritten Aspekt und umgekehrt, weswegen zur Vermeidung von Wiederholungen diesbezüglich auf die obigen Ausführungen zur Zuführvorrichtung verwiesen wird.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer Vorrichtung zum Weiterverarbeiten einer Würstchenkette mit einer Ausführungsform einer erfindungsgemäßen Zuführvorrichtung;
- Fig. 2:: eine Draufsicht der erfindungsgemäßen Zuführvorrichtung aus Fig.1;
- Fig. 3:: perspektivische Detailansicht der Zuführvorrichtung aus Fig. 1;
- Fig. 4:: eine Frontansicht der erfindungsgemäßen Zuführvorrichtung;eine
- Fig. 5:: eine Seitenansicht der erfindungsgemäßen Zuführvorrichtung;
- Fig. 6:: eine Frontansicht einer zweiten Ausführungsform einer erfindungsgemäßen Zuführvorrichtung, und
- Fig. 7 bis 10:: perspektivische Ansichten von verschiedenen Ausgestaltungen der Oberfläche an der Zuführvorrichtung.

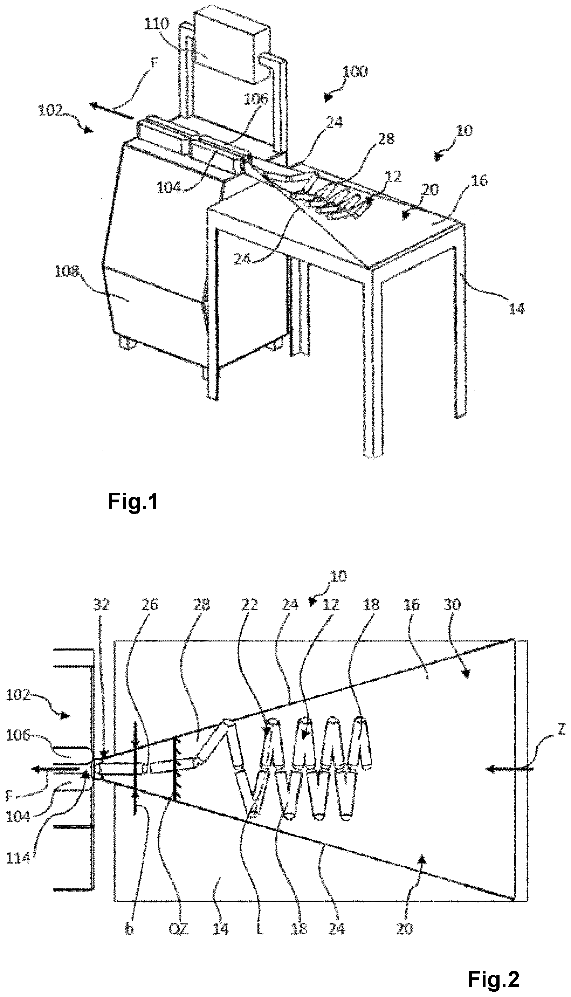

Fig. 1 zeigt eine Vorrichtung 100 zum Weiterverarbeiten einer aus mehreren Würstchen 18 gebildeten Würstchenkette 12, welche eine die Würstchenkette 12 übernehmende und in einer Förderrichtung F transportierende Fördereinrichtung 102 mit mehreren Förderelementen 104, 106 aufweist. Die Vorrichtung 100 weist ein Gehäuse 108 auf, an dem die Fördereinrichtung 102 mit ihren Förderelementen 104, 106 angeordnet ist. Die Vorrichtung 100 umfasst ferner eine Steuerungseinheit 110, die signalleitend mit der Fördereinrichtung 102 zum Ansteuern der Förderelemente 104, 106 gekoppelt ist. Die Steuerungseinheit 110 weist ein nicht näher dargestelltes Bediendisplay zum Einstellen entsprechender Prozessdaten und Parameter auf.

An der Fördereinrichtung 102 ist stromaufwärts eine Zuführvorrichtung 10 zum Zuführen der Würstchenkette 12 zu der die Würstchenkette 12 weiterverarbeitenden Vorrichtung 100 angeordnet. Die Zuführvorrichtung 10 umfasst ein Gestell 14, welches auch als eine Art Gehäuse angesehen werden kann, und ein an dem Gestell 14 angeordnetes Zuführteil 16 zum Zuführen der aus miteinander verbundenen Würstchen 18 bestehenden Würstchenkette 12 zu der Fördereinrichtung 102. Das Gestell 14 ist in der vorliegend gezeigten Ausführungsform als Auflagetisch ausgebildet.

Das an dem Gestell 14 angeordnete Zuführteil 16 weist eine Oberfläche 20 auf, auf der die Würstchenkette 12 im Betrieb der Vorrichtung 10 aufliegt und in einer Zuführrichtung Z in Richtung der weiterverarbeitenden Vorrichtung 100 bewegt wird. Die Zuführrichtung Z und die Förderrichtung F sind vorliegend koaxial ausgerichtet.

Wie aus den Fig. 1 und 2 ersichtlich, wird die Würstchenkette 12 mit den Würstchen 18 mäanderförmig auf die Oberfläche 20 des Zuführteils 16 aufgelegt, derart, dass die Würstchen 18 in etwa quer zur Zuführrichtung Z der Würstchenkette 12 zur Fördereinrichtung 102 ausgerichtet sind. Vorliegend bilden zwei in Reihe hintereinandergelegte Würstchen 18 einen etwa geradlinigen Abschnitt 22 der aufliegenden Würstchenkette 12 aus. Mit Bewegen der Würstchenkette 12 in Zuführrichtung Z werden insbesondere jeweils die Enden der geradlinigen Abschnitte 22 der mäanderförmig verlegten Würstchenkette 12 quer zur eigentlichen Zuführrichtung Z beschleunigt. Um die auf die Würstchenkette 12 einwirkenden Kräfte bei der Querbeschleunigung zu reduzieren, ist gemäß der Erfindung vorgesehen, dass die Oberfläche 20 des Zuführteils 16 im Wesentlichen quer zur Zuführrichtung Z trichterförmig konkav ausgebildet ist, derart, dass die Würstchen 18, bezogen auf die Zuführrichtung Z, von äußeren Bereichen 24 der Oberfläche 20 wenigstens abschnittsweise radial nach innen gelenkt werden.

In einer bevorzugten Ausführung werden die äußeren Bereiche 24 der Oberfläche 20 in Zuführrichtung Z zunehmend steiler. Das mit seiner entsprechend geformten Oberfläche 20 ausgerüstete Zuführteil 16 ist aufgrund der in Zuführrichtung Z zunehmenden Steilheit der äußeren Bereiche 24 der Oberfläche 20 dazu eingerichtet, dass die Würstchen 18 bezogen auf die Zuführrichtung Z verstärkend radial nach innen gelenkt werden. Aufgrund der zunehmend steiler werdenden äußeren Bereiche 24 wirkt somit unterstützend die Schwerkraft auf die Bewegung der Würstchen 18; wodurch vorzugsweise die Zugbelastung auf die Würstchenkette 12 und insbesondere die die einzelnen Würstchen 18 miteinander verbindenden Abdrehstellen 26 verringert ist.

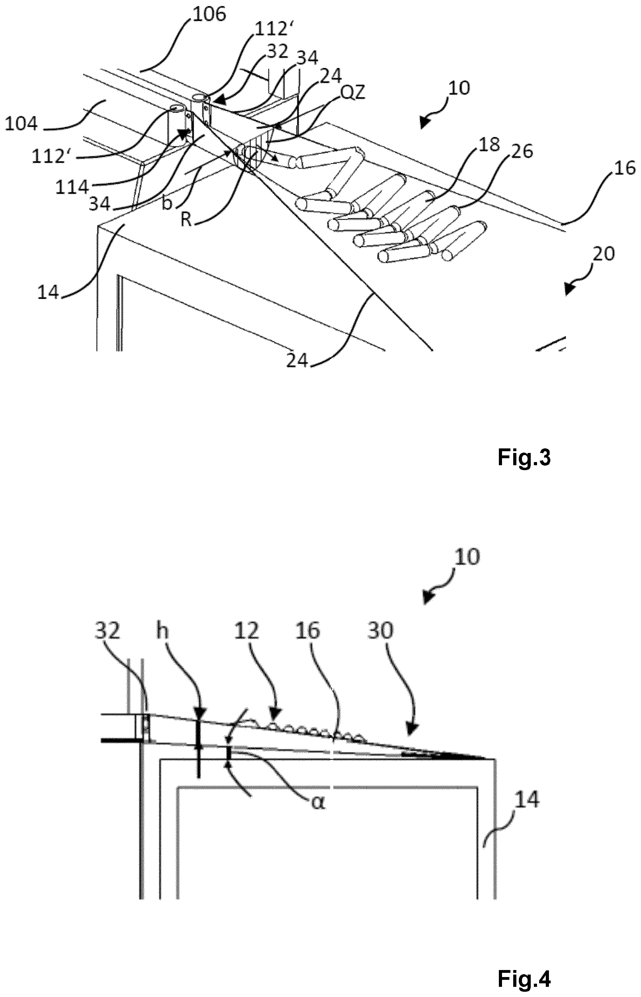

Wie aus der in Fig. 3 gezeigten Detailansicht zu entnehmen ist, definiert die Oberfläche 20 des Zuführteils 16 einen sich im Wesentlichen quer zur Zuführrichtung Z aufspannenden Zuführquerschnitt Q_{Z}. Der Zuführquerschnitt Q_{Z} ist im Sinne der Erfindung nach oben begrenzt durch eine gedachte Linie, welche zwischen den beiden oberen seitlichen Rändern der äußeren Bereiche 24 der Oberfläche 20 des Zuführteils 16 verläuft. In Figur 3 ist beispielsweise insoweit ersichtlich, dass an dem eingezeichneten Ort die gedachte Linie gemäß der Breite b den Zuführquerschnitt Q_{Z} nach oben hin begrenzt, während die Oberfläche 20 des Zuführteils 16 den Zuführquerschnitt Q_{Z} seitlich und nach unten begrenzt oder definiert.

In Zuführrichtung Z gesehen, ist der Zuführquerschnitt Q_{Z} am ersten Ende der Oberfläche 20 des Zuführteils 16 relativ gering oder sogar gleich Null, und wird dann zunächst größer. Im weiteren Verlauf in Zuführrichtung Z gesehen, insbesondere ab etwa der Hälfte des Zuführteils 16, 16', verringert sich dann der Zuführquerschnitt Q_{Z} in Richtung auf den Abgabebereich 32. Die Breite b der Oberfläche 20 verringert sich über die gesamte Länge des Zuführteils 16, 16', während die Höhe h der seitlichen Ränder der äußeren Bereiche 24 zunimmt. Es wäre auch erfindungsgemäß, wenn der Zuführquerschnitt Q_{Z} nach oben begrenzt wäre durch einen nicht gezeigten Deckel oder eine obere Wand.

Wie Fig. 3 weiter verdeutlicht, verringert sich der Zuführquerschnitt Q_{Z} in Zuführrichtung Z in seiner Breite, also zwischen den die Breite b des Zuführteils 16 bestimmenden äußeren Bereichen 24. In einer speziellen Ausführung der Erfindung ist vorgesehen, dass der Zuführquerschnitt Q_{Z} entlang zumindest eines Abschnitts in Zuführrichtung Z im Wesentlichen U-förmig ausgebildet ist.

In der vorliegend gezeigten Ausführung bildet die Oberfläche 20 des Zuführteils 16 mindestens entlang eines Abschnitts in Zuführrichtung Z einen nach oben offenen, sich in Zuführrichtung Z verengenden Trichter 28 aus. Wie Fig. 3 ferner zeigt, wird der von der Oberfläche 20 des Zuführteils 16 definierte Zuführquerschnitt Q_{Z} zumindest bereichsweise von einem Radius R ausgebildet. In der vorliegend gezeigten Ausführung verringert sich der Radius R in Zuführrichtung.

Das Zuführteil 16 weist zumindest abschnittsweise einen Aufnahmebereich 30 zum Auflegen der Würstchenkette 12 auf. In der vorliegend gezeigten Ausführung des Zuführteils 16 weist der Aufnahmebereich 30 zumindest quer zur Zuführrichtung Z eine konkave Krümmung auf, welche insbesondere einen Radius R größer 1 m, vorzugsweise größer 2 m hat.

Zudem weist das Zuführteil 16 einen durch die Oberfläche 20 definierten Abgabebereich 32 zum Abgeben der Würstchenkette 12 auf, der die geringste Breite b bzw. den geringsten Zuführquerschnitt Q_{Z} in Breitenrichtung des Zuführteils 16 hat. Speziell der Abgabebereich 32 der Oberfläche 20 für die Würstchenkette 12 weist eine U-Form auf. Wie ferner aus Fig. 3 zu entnehmen ist, sind im Abgabebereich 32 zusätzlich zur konkaven Krümmung der Oberfläche 20 zwei im Wesentlichen parallel zueinander verlaufende, seitliche Wandabschnitte 34 vorgesehen. Die Wandabschnitte 34 weisen einen Abstand A zueinander auf, der dem doppelten Radius R der zugehörigen, die Wandabschnitte 34 miteinander verbindenden konkav gekrümmten Oberfläche 20 entspricht.

In einer Ausgestaltung der Erfindung ist vorgesehen, dass die Wandabschnitte 34 einen Abstand A zueinander aufweisen, der größer ist als der Durchmesser der Würstchenkette 12 und kleiner ist als ein Mittenabstand zweier Umlenkrollen 112, 112' der Fördereinrichtung 102, insbesondere der zwei einander gegenüberstehenden Förderelemente 104, 106, welche einen Einlaufbereich 114 an der Vorrichtung 100 für die Würstchenkette 12 definieren.

In einer vorliegend bevorzugten Ausführung verringert sich der Zuführquerschnitt Q_{Z}, bezogen auf seine Breite b, und/oder der den Zuführquerschnitt Q_{Z} bereichsweise ausbildende Radius R in Zuführrichtung Z kontinuierlich. In der vorliegend gezeigten Ausführung verringert sich die Breite b des Zuführquerschnitts Q_{Z} allmählich, sodass keine Absätze zwischen den in Zuführrichtung hintereinander angeordneten Abschnitten der Oberfläche 20 des Zuführteils 16 vorhanden sind. Die Oberfläche 20 ist somit bevorzugt absatzfrei ausgebildet.

Wie Fig. 4 zeigt, ist die Oberfläche 20 des Zuführteils vom Aufnahmebereich 30 in Richtung des Abgabebereichs 32 ansteigend ausgerichtet. Die Oberfläche 20 weist ausgehend vom Aufnahmebereich 30 des Zuführteils 16 in Richtung des Abgabebereichs 32 einen positiven Steigungswinkel α von kleiner 10° auf. In der in Fig. 4 gezeigten Ausführung ist ferner vorgesehen, dass die Oberfläche 20 vom Aufnahmebereich 30 in Richtung des Abgabebereichs 32 einen im Wesentlichen geradlinigen Verlauf mit einer konstanten Steigung hat.

Wie ferner aus Fig. 4 zu entnehmen ist, weist das Zuführteil 16 eine Höhe h auf, welche ausgehend vom Aufnahmebereich 30 in Richtung des Abgabebereichs 32 größer wird. Der Zuführquerschnitt Q_{Z} der Oberfläche 20 nimmt somit in Höhenrichtung, jeweils begrenzt durch die oberen Ränder der äußeren Bereiche 24, vom Aufnahmebereich 30 in Richtung des Abgabebereichs 32 zu.

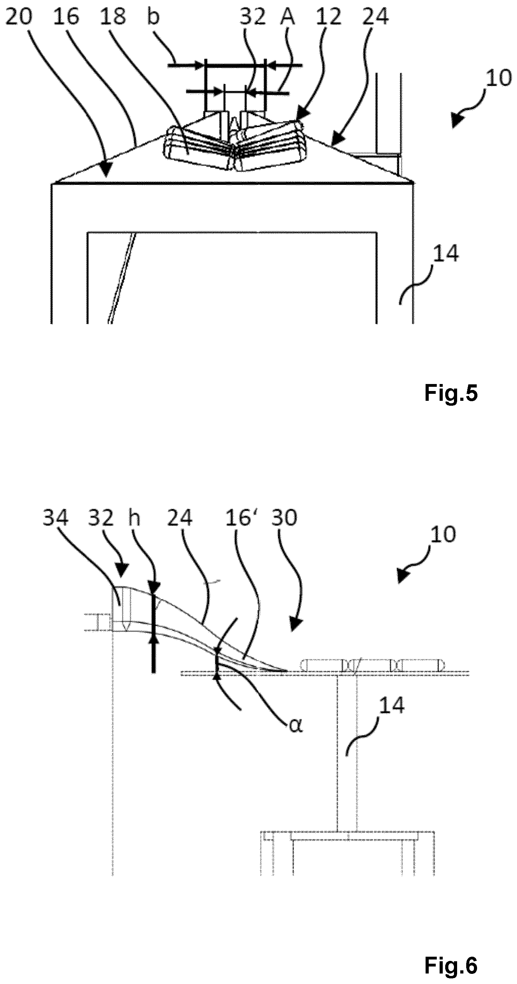

Fig. 5 zeigt eine Seitenansicht der Zuführvorrichtung 10 und damit in Zuführrichtung Z der Würstchenkette. Fig. 5 verdeutlicht die erfindungsgemäße Ausgestaltung des Zuführteils 16 mit seinen vom Aufnahmebereich 30 in Richtung des Abgabebereichs 32 zunehmend steiler werdenden äußeren Bereichen 24, welche das Umlenken der im Aufnahmebereich 30 aufliegenden Würstchen 18, deren Längsachsen L noch etwa quer zur Zuführrichtung Z der Würstchenkette 12 zur weiterverarbeitenden Vorrichtung 100 liegen, bei der Zuführbewegung der Würstchenkette 12 in Richtung des Abgabebereichs 32 unterstützen.

Fig. 6 zeigt eine alternative Ausgestaltung einer Zuführvorrichtung 10', welche die grundsätzliche Ausgestaltung der in den Fig. 1 bis 5 beschriebenen Zuführvorrichtung 10 aufweist. Im Gegensatz zur vorher beschriebenen Ausführungsform umfasst die Zuführvorrichtung 10' ein Zuführteil 16' mit einer Oberfläche 20, die entlang eines Abschnitts in Zuführrichtung Z einen konkav und/oder konvex gekrümmten Verlauf aufweist. Die Oberfläche 20 des Zuführteils 16' an der Zuführvorrichtung 10' weist somit ebenfalls einen vom Aufnahmebereich 30 in Richtung des Abgabebereichs 32 ansteigenden Verlauf auf. Der Steigungswinkel α der Oberfläche 20 des Zuführteils 16' ist ebenfalls positiv, jedoch variiert die Steigung der Oberfläche 20 in Zuführrichtung in einem Winkel von 0° bis 10°.

Zudem ist der Aufnahmebereich 30 am Zuführteil 16' im Wesentlichen eben ausgebildet, sodass die Oberfläche 20 zumindest quer zur Zuführrichtung Z einen ungekrümmten Verlauf aufweist.

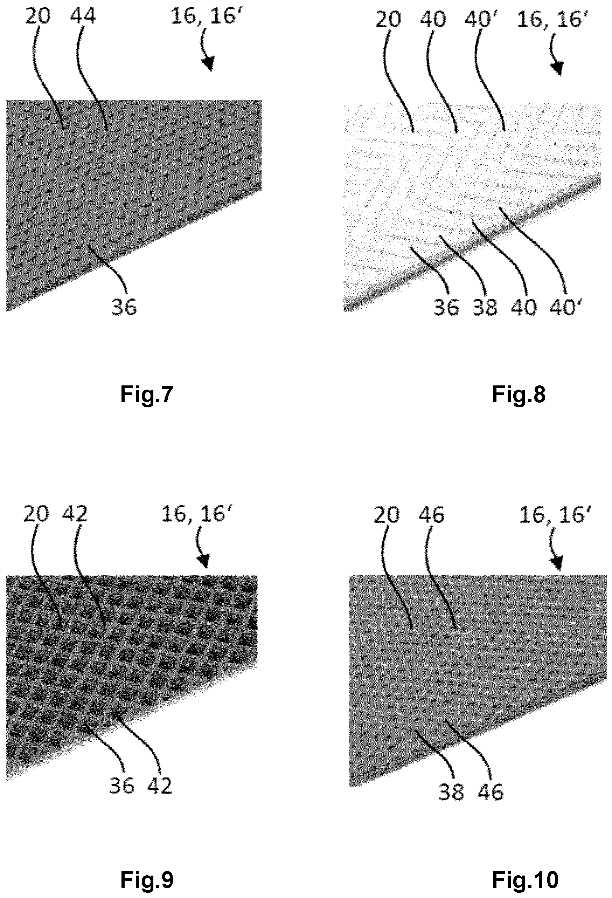

In einer Ausführungsform der Erfindung ist ferner vorgesehen, dass das Zuführteil 16, 16' eine strukturierte Oberfläche 20 aufweist, die vorzugsweise eine Auflagefläche mit einem verringerten Reibungskoeffizienten für die Würstchenkette 12 definiert. Wie aus den Fig. 7 bis 10 entnehmbar ist, weist die strukturierte Oberfläche 20 Erhebungen 36 und/oder Vertiefungen 38 auf.

Die Erhebungen 36 können, wie die Fig. 7, 8 und 9 zeigen, beispielsweise als an der Oberfläche 20 vorstehenden Rillen 40, Pyramiden 42 oder Noppen 44 ausgebildet sein. Die Vertiefungen 38 können, wie aus den Fig. 8 und 10 zu entnehmen ist, als an der Oberfläche 20 zurückspringende Rillen 40' oder in das das Zuführteil 16, 16' ausbildende Material eingelassene Waben 46 ausgebildet sein.

Das Zuführteil 16, 16' ist vorliegend aus einem flachen Bandmaterial ausgebildet, wobei das gesamte Zuführteil 16, 16' im Wesentlichen quer zur Zuführrichtung Z trichterförmig konkav mit einer sich in Zuführrichtung der Würstchenkette verringernden Breite b ausgebildet ist. Das Zuführteil 16, 16' kann aus einem elastisch und/oder plastisch verformbaren Material hergestellt sein, insbesondere Kunststoff, Edelstahl oder einem Verbundmaterial.

In einer möglichen Ausführung ist die Oberfläche 20 mit einer ihren Reibungskoeffizient verringernden Beschichtung ausgerüstet bzw. ist im Betrieb der Zuführvorrichtung auf die Oberfläche 20 ein Gleitmittel aufgebracht. Ähnliche oder identische Bauteile sind mit denselben Bezugszeichen bezeichnet.

### Bezugszeichenliste:

- 10, 10': Zuführvorrichtung
- 12: Würstchenkette
- 14: Gestell
- 16, 16': Zuführteil
- 18: Würstchen
- 20: Oberfläche
- 22: geradliniger Abschnitt
- 24: äußerer Bereich
- 26: Abdrehstelle
- 28: Trichter
- 30: Aufnahmebereich
- 32: Abgabebereich
- 34: Wandabschnitt
- 36: Erhebung
- 38: Vertiefung
- 40, 40': Rille
- 42: Pyramide
- 44: Noppe
- 46: Wabe
- 100: Vorrichtung
- 102: Fördereinrichtung
- 104, 106: Förderelement
- 108: Gehäuse
- 110: Steuerungseinheit
- 112, 112': Umlenkrolle
- 114: Einlaufbereich
- A: Abstand
- b: Breite
- F: Förderrichtung
- h: Höhe
- L: Längsachse
- R: Radius
- Qz: Zuführquerschnitt
- Z: Zuführrichtung
- α: Steigungswinkel

## Patentansprüche

1. Zuführvorrichtung (10, 10') zum Zuführen einer aus mehreren Würstchen (18) gebildeten Würstchenkette (12) zu einer die Würstchenkette (12) weiterverarbeitenden Vorrichtung (100), mit
- einem Gestell (14), und
- einem an dem Gestell (14) angeordneten Zuführteil (16, 16') zum Zuführen der Würstchenkette (12) zur weiterverarbeitenden Vorrichtung (100), wobei das Zuführteil (16, 16') eine Oberfläche (20) aufweist, auf der die Würstchenkette (12) im Betrieb aufliegt und in einer Zuführrichtung (Z) in Richtung der weiterverarbeitenden Vorrichtung (100) bewegt wird,
wobei die Oberfläche (20) des Zuführteils (16, 16') trichterförmig konkav ausgebildet ist, derart, dass die Würstchen (18) mit Bewegen in Zuführrichtung (Z), bezogen auf die Zuführrichtung (Z), von äußeren Bereichen (24) der Oberfläche (20) wenigstens abschnittsweise nach innen gelenkt werden, und
**dadurch gekennzeichnet, dass** die Oberfläche (20) des Zuführteils (16, 16') vom Aufnahmebereich (30) in Richtung des Abgabebereichs (32) ansteigend ausgerichtet ist.

2. Zuführvorrichtung (10, 10') nach Anspruch 1,
**dadurch gekennzeichnet, dass** die äußeren Bereiche (24) der Oberfläche (20) in Zuführrichtung (Z) zunehmend steiler werden, derart, dass die Würstchen (18) aufgrund der zunehmenden Steilheit verstärkt, insbesondere radial, nach innen gelenkt werden.

3. Zuführvorrichtung (10, 10') nach Anspruch 1 oder 2,
**dadurch gekennzeichnet, dass** die Oberfläche (20) des Zuführteils (16, 16') einen sich im Wesentlichen quer zur Zuführrichtung (Z) aufspannenden Zuführquerschnitt (Q_{Z}) definiert, der sich in Zuführrichtung (Z) mindestens abschnittsweise verringert, wobei vorzugsweise der durch die Oberfläche (20) begrenzte Zuführquerschnitt (Q_{Z}) entlang zumindest eines Abschnitts in Zuführrichtung (Z) im Wesentlichen U-förmig ausgebildet ist.

4. Zuführvorrichtung (10, 10') nach einem der vorstehenden Ansprüche 1 bis 3,
**dadurch gekennzeichnet, dass** die Oberfläche (20) des Zuführteils (16, 16') mindestens entlang eines Abschnitts in Zuführrichtung (Z) einen nach oben offenen, sich in Zuführrichtung (Z) verengenden Trichter (28) ausbildet, wobei vorzugsweise die Oberfläche (20) im Wesentlichen absatzfrei ausgebildet ist.

5. Zuführvorrichtung (10, 10') nach einem der vorstehenden Ansprüche 3 bis 4,
**dadurch gekennzeichnet, dass** der von der Oberfläche (20) des Zuführteils (16, 16') definierte Zuführquerschnitt (Q_{Z}) zumindest bereichsweise von einem Radius (R) ausgebildet wird, der sich in Zuführrichtung (Z) verringert.

6. Zuführvorrichtung (10, 10') nach einem der vorstehenden Ansprüche 3 bis 5,
**dadurch gekennzeichnet, dass** sich die Breite (b) der Oberfläche (20), gemessen an ihrer oberen Begrenzung, wenigstens abschnittsweise in Zuführrichtung (Z) verringert.

7. Zuführvorrichtung (10, 10') nach einem der vorstehenden Ansprüche 3 bis 6,
**dadurch gekennzeichnet, dass** die Oberfläche (20) entlang eines Abschnitts in Zuführrichtung (Z) einen im Wesentlichen geradlinigen, einen konvex oder konkav gekrümmten Verlauf aufweist.

8. Zuführvorrichtung (10, 10') nach einem der vorstehenden Ansprüche,
**dadurch gekennzeichnet, dass** die Oberfläche (20) des Zuführteils (16, 16') zumindest abschnittsweise einen in Zuführrichtung (Z) ersten Aufnahmebereich (30) zum Auflegen der Würstchenkette (12) definiert, wobei vorzugsweise der Aufnahmebereich (30) im Wesentlichen eben ausgebildet ist oder zumindest quer zur Zuführrichtung (Z) eine konkave Krümmung aufweist, welche vorzugsweise einen Radius (R) größer 1 m hat.

9. Zuführvorrichtung (10, 10') nach einem der vorstehenden Ansprüche,
**dadurch gekennzeichnet, dass** die Oberfläche (20) einen Abgabebereich (32) zum Abgeben der Würstchenkette (12) definiert, der die geringste Breite (b) oder den geringsten Zuführquerschnitt (Q_{Z}) aufweist.

10. Zuführvorrichtung (10, 10') nach Anspruch 9,
wobei im Abgabebereich (32) zusätzlich zur konkaven Krümmung der Oberfläche (20) zwei im Wesentlichen parallel zueinander verlaufende seitliche Wandabschnitte (34) vorgesehen sind, wobei vorzugsweise die Wandabschnitte (34) einen Abstand (A) zueinander aufweisen, der größer ist als der Durchmesser der Würstchen (18) und kleiner ist als der Mittenabstand zweier Förderelemente (104, 106) einer Fördereinrichtung (102) der weiterverarbeitenden Vorrichtung (100), welche einen Einlaufbereich (114) für die Würstchenkette (12) an der weiterverarbeitenden Vorrichtung (100) definieren.

11. Zuführvorrichtung (10, 10') nach einem der vorstehenden Ansprüche,
**dadurch gekennzeichnet, dass** das Zuführteil (16, 16') eine strukturierte Oberfläche (20) aufweist, die vorzugsweise eine Auflagefläche mit einem verringerten Reibungskoeffizienten für die Würstchenkette (12) ausbildet, wobei vorzugsweise die strukturierte Oberfläche (20) Erhebungen und/oder Vertiefungen (36, 38) aufweist.

12. Zuführvorrichtung (10, 10') nach einem der vorstehenden Ansprüche,
**dadurch gekennzeichnet, dass** die Oberfläche (20) Strukturierungen aufweist, ausgewählt aus der Gruppe: Waben (46), Rillen (40, 40'), Pyramiden (42), Noppen (46) und Kombinationen derer,
und/oder
die Oberfläche (20) mit einer ihren Reibungskoeffizienten verringernden Beschichtung ausgerüstet ist.

13. Zuführvorrichtung (10, 10') nach einem der vorstehenden Ansprüche,
**dadurch gekennzeichnet, dass** das Zuführteil (16, 16') aus einem flachen Bandmaterial ausgebildet ist, wobei das gesamte Zuführteil (16, 16') trichterförmig mit einer sich in Zuführrichtung (Z) der Würstchenkette (12) verringernden Breite (b) ausgebildet ist,
und/oder
das Zuführteil (16, 16') aus einem elastisch und/oder plastisch verformbaren Material ausgebildet ist, insbesondere Kunststoff, Edelstahl oder einem Verbundmaterial.

14. Zuführvorrichtung (10, 10') zum Zuführen einer aus mehreren Würstchen (18) gebildeten, mäanderförmigen Würstchenkette (12) zu einer die mäanderförmige Würstchenkette (12) weiterverarbeitenden Vorrichtung (100), mit
- einem Gestell (14), und
- einem an dem Gestell (14) angeordneten Zuführteil (16, 16') zum Zuführen der mäanderförmigen Würstchenkette (12) zur weiterverarbeitenden Vorrichtung (100), wobei das Zuführteil (16, 16') eine Oberfläche (20) aufweist, auf der die Würstchenkette (12) im Betrieb mäanderförmig aufliegt und in einer Zuführrichtung (Z) in Richtung der weiterverarbeitenden Vorrichtung (100) bewegt wird,
**dadurch gekennzeichnet, dass** die Oberfläche (20) des Zuführteils (16, 16') trichterförmig konkav ausgebildet ist, derart, dass die Würstchen (18) der mäanderförmig aufgelegten Würstchenkette (12) mit Bewegen in Zuführrichtung (Z), bezogen auf die Zuführrichtung (Z), von äußeren Bereichen (24) der Oberfläche (20) wenigstens abschnittsweise nach innen gelenkt werden,
wobei die äußeren Bereiche (24) der Oberfläche (20) in Zuführrichtung (Z) zunehmend steiler werden, derart, dass die Würstchen (18) der mäanderförmigen Würstchenkette (12) aufgrund der zunehmenden Steilheit verstärkt, insbesondere radial, nach innen gelenkt werden,
und wobei die Oberfläche des Zuführteils einen sich im Wesentlichen quer zur Zuführrichtung aufspannenden Zuführquerschnitt definiert, der sich in Zuführrichtung mindestens abschnittsweise verringert, wodurch eine unterstützende seitliche Führung der mäanderförmig auf die Oberfläche des Zuführteils aufgelegten Würstchenkette erfolgt.

15. Vorrichtung (100) zum Weiterverarbeiten einer Würstchenkette (12), mit zumindest einer die Würstchenkette (12) übernehmenden und in einer Förderrichtung (F) transportierenden Fördereinrichtung (102), und einer zur Fördereinrichtung (102) stromaufwärts angeordneten Zuführvorrichtung (10), **dadurch gekennzeichnet, dass** die Zuführvorrichtung (10) nach einem der vorstehenden Ansprüche 1 bis 14 ausgebildet ist.

## Claims

1. A feed apparatus (10, 10') for feeding a link of sausages (12) composed of a plurality of sausages (18) to an apparatus (100) for further processing the link of sausages (12), comprising
- a frame (14), and
- a feeder element (16, 16'), arranged on the frame (14), for feeding the link of sausages (12) to the further processing apparatus (100), wherein the feeder element (16, 16') has a surface (20) on which the link of sausages (12) lies during operation and is moved in a feeding direction (Z) towards the further processing apparatus (100),
wherein the surface (20) of the feeder element (16, 16') is funnel-shaped and concave, such that the sausages (18), as they move in the feeding direction (Z), are deflected inwards, relative to the feeding direction (Z), from the peripheral areas (24) of the surface (20), at least in sections, and
**characterized in that** the surface (20) of the feeder element (16, 16') rises from the receiving area (30) in the direction of the dispensing area (32).

2. The feed apparatus (10, 10') according to claim 1,
**characterized in that** the peripheral areas (24) of the surface (20) become increasingly steep in the feeding direction (Z), such that the sausages (18) are increasingly deflected inwards, in particular radially, due to the increasing steepness.

3. The feed apparatus (10, 10') according to claim 1 or 2,
**characterized in that** the surface (20) of the feeder element (16, 16') defines a feed cross-section (Q_{Z}) which extends substantially transversely to the feeding direction (Z) and which progressively decreases in the feeding direction (Z), at least in sections, wherein preferably the feed cross-section (Q_{Z}) defined by the surface (20) is substantially U-shaped along at least one section in the feeding direction (Z).

4. The feed apparatus (10, 10') according to any one of the preceding claims 1 to 3,
**characterized in that** the surface (20) of the feeder element (16, 16') forms an upwardly open feed hopper (28) that narrows in the feeding direction (Z) along at least one section in the feeding direction (Z), wherein the surface (20) is substantially step-free.

5. The feed apparatus (10, 10') according to any one of the preceding claims 3 to 4,
**characterized in that** the feed cross-section (Q_{Z}) defined by the surface (20) of the feeder element (16, 16') is formed at least in some areas by a radius (R) which decreases in the feeding direction (Z).

6. The feed apparatus (10, 10') according to any one of the preceding claims 3 to 5,
**characterized in that** the width (b) of the surface (20), measured at its upper boundary, decreases at least in sections in the feeding direction (Z).

7. The feed apparatus (10, 10') according to any one of claims 3 to 6,
**characterized in that** the surface (20) has a substantially straight, a convex and/or a concavely curved profile along one section in the feeding direction (Z).

8. The feed apparatus (10, 10') according to any one of the preceding claims,
**characterized in that** the surface (20) of the feeder element (16, 16') defines, at least in sections, a first receiving area (30) in the feeding direction (Z) for depositing the link of sausages (12), wherein preferably the receiving area (30) is substantially planar or has a concave curvature, at least transversely to the feeding direction (Z), which preferably has a radius (R) greater than 1 meter.

9. The feed apparatus (10, 10') according to any one of the preceding claims,
**characterized in that** the surface (20) defines a dispensing area (32) for dispensing the link of sausages (12) and which has the smallest width (b) or the smallest feed cross-section (Qz).

10. The feed apparatus (10, 10') according to claim 9,
wherein two lateral wall sections (34) extending substantially parallel to each other are provided in the dispensing area (32) in addition to the concave curvature of the surface (20), wherein preferably the wall sections (34) are spaced apart from each other by a distance (A) that is greater than the diameter of the sausages (18) and less than the center-to-center distance between two conveyor elements (104, 106) of a conveyor (102) of the further processing apparatus (100), which define an infeed area (114) for the link of sausages (12) to the further processing apparatus (100).

11. The feed apparatus (10, 10') according to any one of the preceding claims,
**characterized in that** the feeder element (16, 16') has a structured surface (20) which preferably forms a support surface having a reduced coefficient of friction for the link of sausages (12), wherein preferably the structured surface (20) has protrusions and/or indentations (36, 38).

12. The feed apparatus (10, 10') according to any one of the preceding claims,
**characterized in that** the surface (20) has structurations, selected from the group: honeycombs (46), grooves (40, 40'), pyramids (42), nubs (46) and combinations thereof,
and or
the surface (20) is provided with a coating that reduces its coefficient of friction.

13. The feed apparatus (10, 10') according to any one of the preceding claims,
**characterized in that** the feeder element (16, 16') is made of a flat belt material, wherein the entire feeder element (16, 16') is designed in the shape of a funnel with a width (b) that decreases in the feeding direction (Z) of the link of sausages (12),
and/or
the feeder element (16, 16') is made of an elastically and/or plastically deformable material, in particular of plastic, stainless steel or a composite material.

14. A feed apparatus (10, 10') for feeding a meandering link of sausages (12) composed of a plurality of sausages (18) to an apparatus (100) for further processing the meandering link of sausages (12), comprising
- a frame (14), and
- a feeder element (16, 16'), arranged on the frame (14), for feeding the meandering link of sausages (12) to the further processing apparatus (100), wherein the feeder element (16, 16') has a surface (20) on which the meandering link of sausages (12) lies during operation and is moved in a feeding direction (Z) towards the further processing apparatus (100),
**characterized in that** the surface (20) of the feeder element (16, 16') is funnel-shaped and concave, such that the sausages (18) of the meandering link of sausages (12), as they move in the feeding direction (Z), are deflected inwards, relative to the feeding direction (Z), from the peripheral areas (24) of the surface (20), at least in sections,
wherein the peripheral areas (24) of the surface (20) become increasingly steep in the feeding direction (Z), such that the sausages (18) of the meandering link of sausages (12) are increasingly deflected inwards, in particular radially, due to the increasing steepness, and
wherein the surface of the feeder element defines a feed cross-section which extends substantially transversely to the feeding direction and which progressively decreases in the feeding direction, at least in sections, which provides lateral supporting guidance for the link of sausages as it is put down in a meandering pattern onto the surface of the feeder element.

15. An apparatus (100) for further processing a link of sausages (12), comprising
at least one conveyor (102) which takes delivery of the link of sausages (12) and conveys them in a conveying direction (F), and
a feed apparatus (10) arranged upstream from the conveyor (102),
**characterized in that** the feed apparatus (10) is configured according to any one of the preceding claims 1 to 14.

## Revendications

1. Dispositif d'amenée (10, 10') destiné à amener une chaîne de saucisses (12) formée de plusieurs saucisses (18) à un dispositif de transformation (100) de la chaîne de saucisses (12), avec
- un bâti (14), et
- une pièce d'amenée (16, 16') disposée sur le bâti (14) pour amener la chaîne de saucisses (12) au dispositif de transformation (100), dans lequel la pièce d'amenée (16, 16') présente une surface (20) sur laquelle la chaîne de saucisses (12) repose en fonctionnement et est déplacée dans une direction d'amenée (Z) en direction du dispositif de transformation (100),
dans lequel la surface (20) de la pièce d'amenée (16, 16') est réalisée en forme d'entonnoir concave, de telle manière que les saucisses (18) sont dirigées depuis des zones extérieures (24) de la surface (20) vers l'intérieur au moins par endroits avec un déplacement dans la direction d'amenée (Z), par rapport à la direction d'amenée (Z), et
**caractérisé en ce que** la surface (20) de la pièce d'amenée (16, 16') est orientée de manière ascendante depuis la zone de réception (30) en direction de la zone de distribution (32).

2. Dispositif d'amenée (10, 10') selon la revendication 1,
**caractérisé en ce que** les zones extérieures (24) de la surface (20) deviennent de plus en plus raides dans la direction d'amenée (Z), de telle manière que les saucisses (18) sont dirigées vers l'intérieur de manière renforcée, en particulier radialement, en raison de la pente croissante.

3. Dispositif d'amenée (10, 10') selon la revendication 1 ou 2,
**caractérisé en ce que** la surface (20) de la pièce d'amenée (16, 16') définit une section transversale d'amenée (Qz) se serrant sensiblement transversalement par rapport à la direction d'amenée (Z), qui diminue au moins par endroits dans la direction d'amenée (Z), dans lequel de préférence la section transversale d'amenée (Qz) délimitée par la surface (20) est réalisée sensiblement en forme de U le long d'au moins une section dans la direction d'amenée (Z).

4. Dispositif d'amenée (10, 10') selon l'une quelconque des revendications précédentes 1 à 3,
**caractérisé en ce que** la surface (20) de la pièce d'amenée (16, 16') réalise au moins le long d'une section dans la direction d'amenée (Z) un entonnoir (28) ouvert vers le haut, se rétrécissant dans la direction d'amenée (Z), dans lequel de préférence la surface (20) est réalisée sensiblement sans retrait.

5. Dispositif d'amenée (10, 10') selon l'une quelconque des revendications précédentes 3 et 4,
**caractérisé en ce que** la section transversale d'amenée (Qz) définie par la surface (20) de la pièce d'amenée (16, 16') est réalisée au moins par zones par un rayon (R) qui diminue dans la direction d'amenée (Z).

6. Dispositif d'amenée (10, 10') selon l'une quelconque des revendications précédentes 3 à 5,
**caractérisé en ce que** la largeur (b) de la surface (20), mesurée sur sa limite supérieure, diminue au moins par endroits dans la direction d'amenée (Z).

7. Dispositif d'amenée (10, 10') selon l'une quelconque des revendications précédentes 3 à 6,
**caractérisé en ce que** la surface (20) présente un tracé sensiblement rectiligne, incurvé de manière convexe ou concave le long d'une section dans la direction d'amenée (Z).

8. Dispositif d'amenée (10, 10') selon l'une quelconque des revendications précédentes,
**caractérisé en ce que** la surface (20) de la pièce d'amenée (16, 16') définit au moins par endroits une première zone de réception (30) dans la direction d'amenée (Z) pour la pose de la chaîne de saucisses (12), dans lequel de préférence la zone de réception (30) est réalisée de manière sensiblement plane ou présente au moins transversalement à la direction d'amenée (Z) une incurvation concave, qui présente de préférence un rayon (R) supérieur à 1 m.

9. Dispositif d'amenée (10, 10') selon l'une quelconque des revendications précédentes,
**caractérisé en ce que** la surface (20) définit une zone de distribution (32) pour distribuer la chaîne de saucisses (12) qui présente la plus petite largeur (b) ou la plus petite section transversale d'amenée (Qz).

10. Dispositif d'amenée (10, 10') selon la revendication 9,
dans lequel, dans la zone de distribution (32), en plus de l'incurvation concave de la surface (20), deux sections de paroi latérale (34) s'étendant sensiblement parallèlement l'une par rapport à l'autre sont prévues, dans lequel les sections de paroi (34) présentent de préférence une distance (A) l'une par rapport à l'autre, qui est supérieure au diamètre des saucisses (18) et est inférieure à la distance centrale de deux éléments de convoyage (104, 106) d'un système de convoyage (102) du dispositif de transformation (100), qui définissent une zone d'entrée (114) pour la chaîne de saucisses (12) sur le dispositif de transformation (100).

11. Dispositif d'amenée (10, 10') selon l'une quelconque des revendications précédentes,
**caractérisé en ce que** la pièce d'amenée (16, 16') présente une surface (20) structurée qui réalise de préférence une surface d'appui avec un coefficient de frottement réduit pour la chaîne de saucisses (12), dans lequel la surface (20) structurée présente de préférence des parties surélevées et/ou des renfoncements (36, 38).

12. Dispositif d'amenée (10, 10') selon l'une quelconque des revendications précédentes,
**caractérisé en ce que** la surface (20) présente des structurations choisies dans le groupe : alvéoles (46), rainures (40, 40'), pyramides (42), picots (46) et combinaisons de ceux-ci,
et/ou
la surface (20) est équipée d'un revêtement réduisant son coefficient de frottement.

13. Dispositif d'amenée (10, 10') selon l'une quelconque des revendications précédentes,
**caractérisé en ce que** la pièce d'amenée (16, 16') est réalisée à partir d'un matériau de bande plat, dans lequel l'ensemble de la pièce d'amenée (16, 16') est réalisé en forme d'entonnoir avec une largeur (b) se réduisant dans la direction d'amenée (Z) de la chaîne de saucisses (12),
et/ou
la pièce d'amenée (16, 16') est réalisée à partir d'un matériau déformable élastiquement et/ou plastiquement, en particulier à partir de matière plastique, d'acier inoxydable ou d'un matériau composite.

14. Dispositif d'amenée (10, 10') destiné à amener une chaîne de saucisses (12) en forme de méandres formée de plusieurs saucisses (18) à un dispositif de transformation (100) de la chaîne de saucisses (12) en forme de méandres, avec
- un bâti (14), et
- une pièce d'amenée (16, 16') disposée sur le bâti (14) pour amener la chaîne de saucisses (12) en forme de méandres au dispositif de transformation (100), dans lequel la pièce d'amenée (16, 16') présente une surface (20) sur laquelle la chaîne de saucisses (12) repose en forme de méandres lors du fonctionnement et est déplacée dans une direction d'amenée (Z) en direction du dispositif de transformation (100),
**caractérisé en ce que** la surface (20) de la pièce d'amenée (16, 16') est réalisée en forme d'entonnoir concave, de telle manière que les saucisses (18) de la chaîne de saucisses (12) posée en forme de méandres sont dirigées depuis des zones extérieures (24) de la surface (20) vers l'intérieur au moins par endroits avec un déplacement dans la direction d'amenée (Z), par rapport à la direction d'amenée (Z),
dans lequel les zones extérieures (24) de la surface (20) deviennent de plus en plus raides dans la direction d'amenée (Z), de telle manière que les saucisses (18) de la chaîne de saucisses (12) en forme de méandres sont dirigées vers l'intérieur de manière renforcée, en particulier radialement, en raison de la pente croissante,
et dans lequel la surface de la pièce d'amenée définit une section transversale d'amenée se serrant sensiblement transversalement à la direction d'amenée, qui diminue au moins par endroits dans la direction d'amenée, ce qui permet un guidage latéral de soutien de la chaîne de saucisses posée en forme de méandres sur la surface de la pièce d'amenée.

15. Dispositif de transformation (100) d'une chaîne de saucisses (12), avec au moins un système de convoyage (102) recevant la chaîne de saucisses (12) et la transportant dans une direction de convoyage (F), et un dispositif d'amenée (10) disposé en amont du système de convoyage (102), **caractérisé en ce que** le dispositif d'amenée (10) est réalisé selon l'une quelconque des revendications précédentes 1 à 14.
